**Europäisches Patentamt**

**European Patent Office**

**Office européen des brevets**

(19)

(11) Numéro de publication: **0 106 733**
**A1**

(12) **DEMANDE DE BREVET EUROPEEN**

(21) Numéro de dépôt: **83401800.4**

(22) Date de dépôt: **14.09.83**

(51) Int. Cl.³: **B 60 K 31/00**

(30) Priorité: **15.09.82 FR 8215620**

(43) Date de publication de la demande:
**25.04.84 Bulletin 84/17**

(84) Etats contractants désignés:
**AT BE CH DE FR GB IT LI LU NL SE**

(71) Demandeur: **AERO PRODUCT EUROPA**
**Le Bois de Saulzay**
**F-44110 Chateaubriant(FR)**

(72) Inventeur: **Colonello, Rino**
**Le Bois de Saulzay Soudan**
**F-44110 Chateaubriant(FR)**

(74) Mandataire: **Phélip, Bruno et al,**
**c/o Cabinet Harlé & Phélip 21, rue de la Rochefoucauld**
**F-75009 Paris(FR)**

(54) **Appareil limiteur de vitesse pour véhicule à moteur.**

(57) Un capteur (20) de vitesse transmet un signal à un microordinateur (22) qui reçoit par ailleurs un signal de consigne d'un circuit (26). Lorsque le signal de vitesse dépasse le signal de consigne, un dispositif (30) d'alarme donne une indication au conducteur. Lorsque le signal de vitesse dépasse le signal de consigne d'une valeur détermi-née, le microordinateur (22) comporte un organe de manoeuvre (32) qui, par l'intermédiaire d'un mécanisme à déplacement libre limité (36) limite alors positivement la vitesse du véhicule, malgré le conducteur.

EP 0 106 733 A1

## Appareil limiteur de vitesse pour véhicule à moteur.

La présente invention concerne un appareil limiteur de vitesse pour véhicule à moteur, notamment pour véhicule automobile.

On connaît déjà des appareils limiteurs de vitesse qui comportent un dispositif destiné à modifier l'alimentation en carburant du moteur, qu'il soit à injection ou à carburateur. La vitesse du moteur peut être ainsi stabilisée à une valeur choisie. Cependant, ces appareils n'indiquent pas au conducteur qu'ils fonctionnent si bien que celui-ci ne sait pas s'il dispose ou non d'une marge d'accélération.

Le brevet français n° 2 339 174 décrit un appareil élaboré donnant des indications de vitesse à un conducteur d'un véhicule automobile. En particulier, ce brevet indique que, après dépassement d'une vitesse de croisière, puis d'une limite supérieure conseillée, puis d'un seuil d'alarme, le dépassement d'un seuil de commande provoque une diminution de l'alimentation en carburant. Ce document n'indique cependant pas comment une telle diminution peut être réalisée.

Dans d'autres appareils connus, une limitation de vitesse est imposée par modification de l'alimentation en carburant du moteur à l'aide d'une commande de type hydraulique ou pneumatique. Ces appareils présentent des difficultés de montage, avec notamment la présence de conduites hydrauliques et pneumatiques, et nécessitent une modification du circuit du moteur lui-même, si bien que leur installation est relativement compliquée, et que leur fonctionnement est loin d'être fiable.

L'invention concerne un appareil limiteur de vitesse pour véhicule à moteur qui permet au conducteur de réduire lui-même la vitesse de son véhicule lorsque celle-ci devient excessive, mais qui limite aussi cette vitesse d'une manière positive lorsque le conducteur ne la réduit pas lui-même, à partir d'un seuil de vitesse, à l'aide d'un organe de manoeuvre très simple et commode.

L'invention concerne aussi un tel appareil dont le montage est extrêmement simple, qui ne nécessite pas de modification des organes essentiels du moteur, et qui a un coût très réduit.

Plus précisément, l'invention concerne un appareil limiteur de vitesse pour véhicule à moteur, du type qui comprend un capteur destiné à former un signal représentatif de la vitesse du véhicule, un circuit générateur d'un signal de consigne représentatif d'une vitesse limite, un organe de comparaison et de calcul destiné à recevoir le signal de vitesse et le signal de consigne et à former un premier signal de commande lorsque le signal de vitesse est égal ou supérieur au signal de consigne et un second signal de commande lorsque la différence entre le signal de vitesse et le signal de consigne devient égale ou supérieure à une valeur prédéterminée de seuil, un dispositif d'alarme commandé par le premier signal de commande et destiné à donner un avertissement au conducteur du véhicule, et un organe de manoeuvre commandé par le second signal de commande ; selon l'invention, l'organe de manoeuvre est de type électromagnétique, notamment un électro-aimant, et il manoeuvre un élément de l'organe de réglage de vitesse du moteur, dans le sens qui provoque une réduction de cette vitesse.

Il est très avantageux que l'organe de manoeuvre déplace l'élément de l'organe de réglage de vitesse avec une démultiplication, cette caractéristique permettant l'utilisation par exemple d'un électro-aimant peu puissant et très peu coûteux.

L'organe de manoeuvre comporte avantageusement un dispositif à déplacement libre limité qui, lorsque l'organe de manoeuvre n'est pas commandé, permet le déplacement libre de l'organe de réglage et qui, lorsque l'organe de manoeuvre est commandé, limite le déplacement de l'organe de réglage. Le dispositif à déplacement libre limité est avantageusement du type qui comporte un doigt mobile dans une glissière, le doigt ou la glissière étant solidaire de l'organe de réglage et la glissière ou le doigt respectivement étant solidaire de l'organe de manoeuvre.

Il est avantageux que le capteur de vitesse soit d'un type à impulsions dont la fréquence est proportionnelle à la vitesse, et que le circuit générateur d'un signal de consigne forme un signal ayant une fréquence représentative de la vitesse limite.

Le circuit générateur d'un signal de consigne comporte avantageusement un organe de réglage du signal de consigne, placé à la disposition du conducteur du véhicule afin que celui-ci puisse modifier la vitesse limite.

Il est avantageux que, lorsque l'organe de comparaison et de calcul a commencé à transmettre le second signal de commande, il continue à le transmettre tant que le premier signal de commande est présent.

L'organe de comparaison et de calcul est avantageusement un microordinateur.

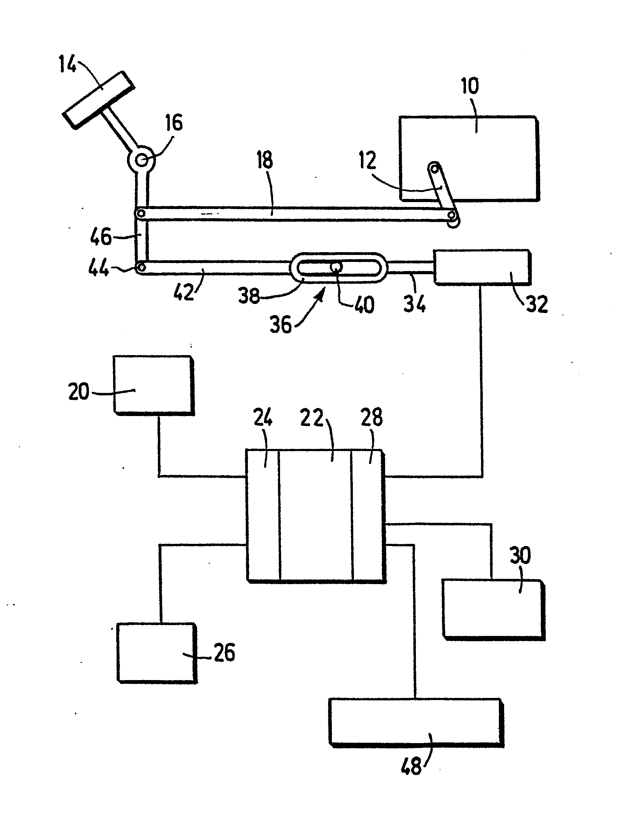

D'autres caractéristiques et avantages de l'invention ressortiront mieux de la description qui va suivre, faite en référence au dessin annexé sur lequel la figure unique est un schéma, en partie sous forme de diagramme synoptique, d'un appareil limiteur de vitesse selon l'invention.

La figure unique représente un exemple d'appareil limiteur de vitesse selon l'invention. Cet appareil est destiné à un véhicule automobile à injection, considéré à titre purement illustratif. On n'a représenté que les éléments essentiels nécessaires à la compréhension de l'invention. Plus précisément, la référence 10 désigne une pompe à injection commandée par une manivelle 12. De manière classique, une pédale 14 d'accélérateur, articulée sur un axe 16, déplace une tringlerie 18 qui commande la manivelle 12 et, ainsi, la quantité de carburant transmise au moteur. La vitesse de celui-ci dépend donc de la position de la pédale 14 d'accélérateur.

L'appareil limiteur de vitesse selon l'invention comprend d'abord un capteur 20 de vitesse. Celui-ci est avantageusement placé à la sortie de la boîte de vitesses, mais il peut aussi s'agir de tout capteur de vitesse connu d'un type quelconque. Il est avantageux que ce capteur 20 transmette un signal dont la fréquence est proportionnelle à la vitesse de sortie de la boîte de vitesses. Ce signal, comprenant des impulsions, parvient à un microordinateur 22 par l'intermédiaire d'un circuit 24 d'entrée.

Un circuit 26, générateur d'un signal de consigne, est aussi relié au microordinateur 22 par l'intermédiaire du circuit 24 d'entrée. Le circuit 26 est un générateur d'impulsions à fréquence déterminée. Il s'agit avantageusement d'un circuit générateur à fréquence réglable, commandé par un élément de manoeuvre qui indique quelle est la vitesse que représente la fréquence du signal formé. De cette manière, le conducteur peut régler simplement la vitesse à laquelle il veut que l'appareil fonctionne. Il peut cependant aussi s'agir d'un circuit générateur qui ne peut pas être réglé par l'utilisateur et qui est préréglé par exemple en usine. Le préréglage peut porter par exemple sur deux ou trois seuils de vitesse qui peuvent être sélectionnés par exemple.

Le microordinateur 22 est relié, par un circuit 28 de sortie, à un dispositif 30 d'alarme, ainsi qu'à un électro-aimant 32, constituant un organe de manoeuvre.

Le dispositif d'alarme 30 est avantageusement un bruiteur. Il peut cependant s'agir de tout dispositif d'alarme commode avisant le conducteur d'un véhicule tel qu'un véhicule automobile. Par exemple, il peut s'agir d'une lampe clignotante incorporée au tableau de bord.

L'électro-aimant 32 commande une bielle 34 qui fait partie d'un dispositif 36 à déplacement libre limité. Ce dispositif comporte essentiellement une glissière 38 solidaire de la bielle 34, et un doigt 40 solidaire d'une tringle 42 articulée en 44 sur le levier 46 de la pédale d'accélérateur.

Selon une caractéristique avantageuse de l'invention, l'articulation 44 de la tringle 42 sur le levier de la pédale d'accélérateur est bien plus éloignée de l'axe 16 de rotation que l'articulation de la tringle 18 sur ce même levier. De cette manière, la force exercée sur le levier au niveau de l'articulation 44 est multipliée et un électro-aimant relativement peu puissant peut exercer des forces importantes sur le levier 46 et sur la pédale 14 d'accélérateur.

Les positions et les dimensions des divers éléments sont telles que, lorsque l'électro-aimant n'est pas alimenté, le doigt 40 est distant des extrémités de la glissière 38 dans toute la plage de réglage de la pédale 14 d'accélérateur. Au contraire, lorsque l'électro-aimant 32 est alimenté, l'extrémité gauche de la glissière 38 (sur la figure unique) vient au contact du doigt 40 si bien que la plage de pivotement du levier d'accélérateur est limitée du côté des valeurs qui correspondent aux vitesses élevées.

On a représenté en outre un dispositif éventuel d'affichage 48, lui-aussi relié au circuit 28 de sortie du microordinateur 22.

On considère maintenant le fonctionnement de l'appareil représenté sur la figure. Le microordinateur 22 reçoit normalement les signaux du capteur 20 de vitesse et du circuit 26 générateur d'un signal de consigne. Il est destiné à former des signaux de commande transmis au dispositif 30 d'alarme et à l'électro-aimant 32, ainsi qu'éventuellement au dispositif 48 d'affichage.

Lorsque le véhicule roule à une vitesse inférieure à une vitesse limite dont le signal du circuit générateur 26 est représentatif, la fréquence des impulsions provenant du capteur 20 est inférieure à celle du signal de consigne provenant du circuit générateur 26, et le microordinateur ne transmet alors aucun signal de commande. Lorsque le conducteur atteint la vitesse pour laquelle la fréquence du signal du capteur 20 est égale à celle du signal de consigne, le microordinateur commence à former un premier signal de commande qu'il transmet au dispositif 30 d'alarme. Celui-ci, qui est avantageusement un bruiteur, indique au conducteur qu'il atteint la vitesse limite et qu'il doit donc décélérer ou au moins ne pas accélérer. Normalement, le conducteur ainsi averti ralentit légèrement et respecte ainsi la limitation de vitesse correspondant au signal de consigne. Si cependant le conducteur ne respecte pas cette limitation, le microordinateur 22 reconnaît une différence de plus en plus grande entre le signal du capteur 20 et celui du circuit générateur 26. Lorsque cette différence atteint une valeur de seuil, indiquant que le conducteur continue à accélérer au lieu de ralentir, le microordinateur 22 transmet un second signal de commande qui parvient à l'électro-aimant 32. Celui-ci attire la bielle 34 et la glissière 38, si bien que le doigt 40 est alors en butée contre l'extrémité de la glissière et la tringle 42 est ramenée vers la droite (sur la figure unique). En conséquence, la force exercée sur le levier 46 d'accélérateur oblige le conducteur à décélérer.

Il est alors avantageux que l'électro-aimant 32 reste excité tant que le micoordinateur 22 n'a pas reconnu que la vitesse indiquée par le capteur 20 est à nouveau devenue égale ou inférieure à la vitesse limite fixée par le signal de consigne. Cependant, dans des variantes,la désexcitation de l'électro-aimant 32 peut être assurée dans d'autres conditions, par exemple pour une seconde valeur de seuil, inférieure à la première.

On a indiqué sur la figure que l'organe de manoeuvre comprenant l'électro-aimant 32 agissait sur la pédale d'accélérateur par l'intermédiaire d'une tringlerie supplémentaire 42, articulée en un point 44 plus éloigné de l'axe 16 de pivotement du levier d'accélération que l'articulation de la tringlerie 18 de commande de la pompe d'injection du moteur. Cette caractéristique est avantageuse car elle permet une multiplication de la force exercée par l'électro-aimant 32. Cependant, l'organe de manoeuvre peut aussi agir sur la manivelle 12, sur la tringle 18 ou sur tout autre élément permettant une commande convenable, de préférence avec une démultiplication appropriée.

En outre, l'appareil peut comporter avantageusement le dispositif 48 d'affichage qui peut donner directement la valeur de la vitesse. Ainsi, la fonction d'affichage de vitesse peut être facilement exécutée sous forme numérique, c'est-à-dire sous une forme très commode pour le conducteur.

Bien qu'on ait indiqué que le circuit de comparaison et de calcul était formé par un microordinateur, cette caractéristique n'est pas indispensable et une combinaison d'éléments permettant des fonctions logiques convient à sa place.

L'appareil représenté est extrêmement simple, et ne comprend qu'un petit nombre d'éléments peu coûteux. Il ne nécessite qu'une adaptation très réduite au moteur du véhicule comportant un tel appareil, et son installation ne modifie en particulier pas du tout les réglages du moteur et des autres organes. Cette simplicité permet une réalisation peu coûteuse et de grande fiabilité, notamment grâce à la commande par l'électro-aimant qui peut être peu puissant et peu coûteux et dont la commande s'effectue par de simples fils électriques. En cas de défaillance de l'appareil, le moteur du véhicule peut continuer à fonctionner normalement, comme si le véhicule ne comportait aucun appareil limiteur de vitesse.

Dans l'exemple considéré, la valeur de seuil utilisée par le microordinateur correspond avantageusement à une différence de vitesses de l'ordre de 5 km/h entre la commande du dispositif d'alarme et celle de l'électro-aimant. Cependant, cette valeur de seuil n'est pas obligatoirement fixe. Elle peut être en particulier proportionnelle à la vitesse. Ainsi, lorsque le circuit 26 est réglable par le conducteur, la valeur de seuil peut être supérieure de 5 km/h à la vitesse limite lorsque celle-ci est de 90 km/h, mais elle peut être supérieure de 8 km/h à la vitesse limite lorsque celle-ci est de 130 km/h.

Il faut en outre noter que, bien qu'on ait décrit l'invention en référence à un véhicule automobile ayant un moteur à injection, elle s'applique à tous les types de véhicules dans lesquels un signal représentatif d'une vitesse peut être formé.

**0106733**

REVENDICATIONS

1.      Appareil limiteur de vitesse pour véhicule à moteur, du type qui comprend ;

- un capteur (20) destiné à former un signal représentatif de la vitesse du véhicule,

- un circuit (26) générateur d'un signal de consigne représentatif d'une vitesse limite,

- un organe (22) de comparaison et de calcul destiné à recevoir le signal de vitesse et le signal de consigne et à former un premier signal de commande lorsque le signal de vitesse est égal ou supérieur au signal de consigne et un second signal de commande lorsque la différence entre le signal de vitesse et le signal de consigne devient égale ou supérieure à une valeur prédéterminée de seuil,

- un dispositif d'alarme (30) commandé par le premier signal de commande et destiné à donner un avertissement au conducteur du véhicule, et

- un organe de manoeuvre (32-42) commandé par le second signal de commande, caractérisé en ce que l'organe de manoeuvre (32) est de type électromagnétique,  et il manoeuvre un élément de l'organe de réglage de vitesse (12) du moteur, dans le sens qui provoque une réduction de cette vitesse.

2.      Appareil selon la revendication 1, caractérisé en ce que l'organe de manoeuvre (32-42) manoeuvre l'élément de l'organe de réglage de vitesse avec multiplication de sa force.

3.      Appareil selon l'une des revendications 1 et 2, caractérisé en ce que l'organe de manoeuvre (32-42) comporte un dispositif (36) à déplacement libre limité qui, lorsque l'organe de manoeuvre n'est pas commandé, permet le déplacement libre de l'organe de réglage et qui, lorsque l'organe de manoeuvre est commandé, limite le déplacement de l'organe de réglage.

4.      Appareil selon la revendication 3, caractérisé en ce que le dispositif (36) à déplacement libre limité comporte un doigt (40) et une glissière (38) dont l'un est solidaire de l'organe de réglage et l'autre est solidaire de

9 0106733

l'organe de manoeuvre.

5. Appareil selon l'une quelconque des revendications précédentes, caractérisé en ce que le capteur (20) de vitesse est un capteur à impulsions dont la fréquence est proportionnelle à la vitesse, et le circuit (26) générateur d'un signal de consigne forme un signal ayant une fréquence représentative de la vitesse limite.

6. Appareil selon l'une quelconque des revendications précédentes, caractérisé en ce que le circuit (26) générateur d'un signal de consigne comporte un organe de réglage du signal de consigne, placé à la disposition du conducteur du véhicule afin que celui-ci puisse modifier la vitesse limite.

7. Appareil selon l'une quelconque des revendications précédentes, caractérisé en ce que l'organe de comparaison et de calcul (22), lorsqu'il a commencé à transmettre le signal de commande, continue à le transmettre tant que le premier signal de commande est présent.

8. Appareil selon l'une quelconque des revendications précédentes, caractérisé en ce que l'organe de comparaison et de calcul (22) est un microordinateur.

9. Appareil selon l'une quelconque des revendications précédentes, caractérisé en ce qu'il comprend en outre un dispositif (48) d'affichage de la vitesse du véhicule.

10. Appareil selon l'une quelconque des revendications précédentes, caractérisé en ce que le dispositif d'alarme (30) est un bruiteur.

1/1

Office européen
des brevets

RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,Y | FR-A-2 339 174  (EKMAN)<br><br>* Page 5, ligne 23 - page 6, lignes 8,33-39; page 12, ligne 4 - page 13, ligne 37; figures 1,2 *<br><br>--- | 1,5-7, 10 | B 60 K  31/00 |
| Y | US-A-4 216 454  (OHTANI et al.)<br>* Colonne 1, lignes 11-14; colonne 2, ligne 64 - colonne 3, ligne 8; figure 2 *<br><br>--- | 1 | |
| A | FR-A-2 409 385  (RENAULT)<br><br>* Page 5, ligne 22 - page 9, ligne 6; page 11, lignea 10-21; page 24, lignes 10-30; figures 1,4 *<br><br>--- | 1-3,5, 6,8 | |
| A | DE-A-2 630 071  (RATHERT)<br>* Page 8, ligne 16 - page 9, ligne 25; figure 1 *<br><br>--- | 1-4 | B 60 K  31/00<br>H 01 F   7/16 |
| A | FR-A-2 470 019  (TISSERONT)<br>* En entier *<br><br>--- | 1-6,9 | |
| A | US-A-2 804 160  (RASHID)<br>* Colonne 8, ligne 43 - colonne 10, ligne 13; colonne 11, ligne 7 - colonne 12, ligne 25; figures 2,5,8 *<br><br>---        -/- | 1-4 | |

DOMAINES TECHNIQUES RECHERCHES (Int. Cl. ³)

Le présent rapport de recherche a été établi pour toutes les revendications

| Lieu de la recherche | Date d'achèvement de la recherche | Examinateur |
|---|---|---|
| LA HAYE | 15-12-1983 | VERLEYE J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

| Catégorie | Citation du document avec indication, en cas de besoin, des parties pertinentes | Revendication concernée | CLASSEMENT DE LA DEMANDE (Int. Cl. ³) |
|---|---|---|---|
| | **DOCUMENTS CONSIDERES COMME PERTINENTS** | | Page  2 |
| A | FR-A-2 161 669  (WESTINGHOUSE) <br> * Page  2,  ligne  28  - page 3, <br> ligne 22; page 4, ligne 20 - page <br> 6, ligne 12; figure 1 * | 1,5,6 | |
| A | US-A-3 460 573  (BEVERDIGE et <br> al.) <br> * Colonne  1, ligne 60 - colonne <br> 2,  ligne  9;  colonne  8, lignes <br> 1-25; figure 1 * | 1,3,4 | |
| A | FR-A-2 275 774  (CITROEN) <br> * Page 4, lignes 15-24; figure 3 <br> * | 1,10 | |
| A | GB-A-2 066 538  (TOYO UMPANKI) | | |
| A | FR-A-2 270 117  (CLERICI et al.) | | DOMAINES TECHNIQUES RECHERCHES (Int. Cl. ³) |
| A | EP-A-0 043 709  (KILOKING) | | |
| A | US-A-4 364 459  (FUTEHALLY) | | |

Le présent rapport de recherche a été établi pour toutes les revendications

| Lieu de la recherche | Date d'achèvement de la recherche | Examinateur |
|---|---|---|
| LA HAYE | 15-12-1983 | VERLEYE J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82